# EUROPÄISCHE PATENTANMELDUNG

(11) **EP 2 181 606 A1**
(43) Veröffentlichungstag der Anmeldung: **05.05.2010**
(21) Anmeldenummer: 09012537.8
(22) Anmeldetag: 02.10.2009
(51) Int. Cl.: A23G 1/04, A23G 1/20, A23G 3/02, A23G 3/00, A23G 1/00

(54) **Vorrichtung zum Dosieren von Süßwarenmassen**

(30) Priorität: 04.11.2008 DE 102008055813
(71) Anmelder: Hosokawa Bepex GmbH, 74211 Leingarten (DE)
(72) Erfinder: Vongeheur, Hermann-Otto, 56567 Neuwied (DE)
(74) Vertreter: Thum, Bernhard

(57) **Zusammenfassung**

Die Erfindung betrifft eine Vorrichtung zum Dosieren von Süßwarenmassen mit wenigstens einer Massezuführöffnung (14) zum kontinuierlichen Zuführen der Süßwarenmasse unter Druck, wenigstens einer Masseabgabeöffnung (16) zum dosierten Abgeben der Süßwarenmasse, wenigstens einen Dosierkolben (20), der mit seiner ersten Kolbenfläche (24) einen Dosierraum (28) begrenzt und in diesem reziprozierend derart bewegbar ist, dass er wechselweise Süßwarenmasse von der Massezuführöffnung (14) in den Dosierraum (28) saugt oder aus diesem zur Masseabgabeöffnung (16) ausstößt, wenigstens einem Ventil, das zum dosierten Abgeben der Süßwarenmasse aus dem Dosierraum über die Masseabgabeöffnung (16) in eine Offenstellung und eine Schließstellung schaltbar ist, wobei der Dosierkolben (20) eine von der ersten Kolbenfläche (24) abgewandte zweite Kolbenfläche (22) aufweist, die einen Speicherraum (26) begrenzt, wobei der Speicherraum (26) bei der reziprozierenden Bewegung des Dosierkolbens (20) wechselweise mit von der Massezuführöffnung (14) zugeführter Süßwarenmasse füllbar oder in den Dosierraum (28) entleerbar ist, wobei die erste Kolbenfläche (24) größer ausgebildet ist als die zweite Kolbenfläche (22) derart, dass bei konstanter Zufuhr der Süßwarenmasse der aktuelle Bedarf an Süßwarenmasse zum Füllen des Dosierraums (28) oder des Speicherraums (26) ohne das Erfordernis einer Süßwarenmasserückfuhr gedeckt ist.

## Beschreibung

Die vorliegende Erfindung betrifft eine Vorrichtung zum Dosieren von Süßwarenmassen.

Bei der Dosierung von Süßwarenmassen, beispielsweise von hochviskosen Massen, die zugepumpt werden müssen, von mit Luft oder Inertgasen aufgeschäumten oder aufgeschlagenen Massen, von übersättigten Zuckerlösungen, wie beispielsweise Hartbonbonmassen, oder Fondantmassen oder anderen vorkristallisierten Massen, werden in der Regel über eine separate Pumpe (Speisepumpe) entsprechende Süßwarenmassen einer Dosiervorrichtung zugeführt. Während man die Pumpe kontinuierlich betreiben muss, und so eine kontinuierliche Zufuhr von Süßwarenmassen zu der Dosiervorrichtung erfolgt, erfolgt die tatsächliche Dosierung, beispielsweise in einzelne Formen oder dergleichen, in der Regel über ein Kolben- oder Ventilsystem, beispielsweise mit einem Schieber, diskontinuierlich. Aus diesem Grunde muss bei kontinuierlicher Süßwarenmassezufuhr Süßwarenmasse zwischengespeichert ("gepuffert") oder zurückgeführt werden, nämlich dann, wenn die Süßwarenmassenabgabe über die einzelnen Düsen oder Mundstücke unterbrochen ist.

Beim Stand der Technik wurden hierfür zum einen Ausgleichskolben verwendet, die etwa in den Massezufuhrtrakt der Vorrichtung integriert waren, um so das bei der diskontinuierlichen Masseabgabe vorübergehend überflüssige Massevolumen zwischenzuspeichern und später weiter nutzen zu können. Derartige Ausgleichskolben sind jedoch einerseits technisch aufwändig und andererseits führen die längere Einwirkung von Scherkräften entweder zu einem "Zusammenbruch" des gebildeten Schaums oder zur Rekristallisation der verarbeiteten Süßwarenmasse. Außerdem ist bei der Reinigung einer solchen Anlage ein größerer Aufwand erforderlich und mit einem größerem Produktverlust zu rechnen.

Zusätzlich oder alternativ zur Bereitstellung von Ausgleichskolben zur Massepufferung ist es im Stand der Technik auch bekannt, eine Bypassleitung vorzusehen, so dass die überflüssige Süßwarenmasse in den Vorratsbehälter zurückgeleitet wird. Dies führt aber dazu, dass an sich bereits verarbeitungsfertige Masse wieder in dem Vorratsbehälter aufbereitet werden muss, beispielsweise rekristallisiert werden und auch auf Temperatur gehalten werden muss, was zu einem hohen Energieverbrauch und zu einer verhältnismäßig ineffizienten Arbeitsweise derartiger Vorrichtungen führt. Die Leistung der vorgeschalteten Komponenten wie Aufschlagmaschine, Pumpe, etc. müssen mindestens um das zweifache der Produktionsleistung der Gesamtanlage größer dimensioniert werden.

Das Dokument DE 10 2005 004 785 A1 betrifft eine Vorrichtung zum Dosieren von Süßwarenmassen, bei der mittels eines Hub-/Dreh-Kolbens Süßwarenmasse aus einem Trichter in eine Kammer gefüllt und aus dieser über einen Gießkanal verpresst werden kann. Wenngleich diese Vorrichtung Vorteile hinsichtlich der Hygiene bildet, hat sie den Nachteil einer diskontinuierlichen Massenzufuhr.

Das Dokument DE 32 33 364 A1 zeigt eine Vorrichtung zur volumetrischen Dosierung von Lebensmittelmassen, die mit Membranen ausgeführt ist. Diese Lösung unterliegt dem Problem einer aufwändigen Reinigung.

Schließlich zeigt das Dokument DE 24 38 796 eine Vorrichtung zum portionsweisen Abfüllen von flüssigem oder pastösem Füllgut, wobei wiederum eine diskontinuierliche Füllgutdosierung vorgesehen ist.

Es ist eine Aufgabe der vorliegenden Erfindung, eine Vorrichtung der eingangs bezeichneten Art bereitzustellen, bei der unter verhältnismäßig geringem technischem Aufwand bei guter Reinigungsmöglichkeit die vorstehend geschilderten Probleme aus dem Stand der Technik nicht bestehen.

Diese Aufgabe wird durch eine Vorrichtung zum Dosieren von Süßwarenmassen mit den Merkmalen des Anspruchs 1 gelöst. Diese ist ausgebildet mit wenigstens einer Massezuführöffnung zum kontinuierlichen Zuführen der Süßwarenmasse unter Druck oder auch drucklos, wenigstens einer Masseabgabeöffnung zum volumengenauen Abgeben der Süßwarenmasse, wenigstens einem Dosierkolben, der mit seiner ersten Kolbenfläche einen Dosierraum begrenzt und in diesem reziprozierend derart bewegbar ist, dass er wechselweise Süßwarenmasse von der Massezuführöffnung in den Dosierraum saugt oder aus diesem zur Masseabgabeöffnung ausstößt, wenigstens einem Ventil, das zum dosierten Abgeben der Süßwarenmasse aus dem Dosierraum über die Masseabgabeöffnung in eine Offenstellung und eine Schließstellung schaltbar ist, wobei es auf der Ansaugseite in umgekehrter Weise in der Offenstellung ein Ansaugen verhindert und in der Schließstellung ein Ansaugen von Süßwarenmasse zulässt. Dabei weist der Dosierkolben eine von der ersten Kolbenfläche abgewandte zweite Kolbenfläche auf, die einen Speicherraum begrenzt, wobei der Speicherraum bei der reziprozierenden Bewegung des Dosierkolbens wechselweise mit von der Massezuführöffnung zugeführter Süßwarenmasse füllbar oder in den Dosierraum entleerbar ist, wobei die erste Kolbenfläche größer ausgebildet ist als die zweite Kolbenfläche derart, dass bei konstanter Zufuhr der Süßwarenmasse der aktuelle Bedarf an Süßwarenmasse zum Füllen des Dosierraums oder des Speicherraums ohne das Erfordernis einer Süßwarenmasserückfuhr gedeckt ist.

Durch Nutzung der reziprozierenden Bewegung des Dosierkolbens, wobei der Dosierkolben während des Dosiervorgangs Süßwarenmasse in den Speicherraum einsaugt, kann ein permanenter konstanter Massezustrom erfolgen, ohne dass Süßwarenmasse zwischengespeichert oder über einen Bypass rückgeführt werden muss. Vielmehr wird der Dosierkolben dazu genutzt dann, wenn das Ventil die Masseabgabeöffnung verschließt und gleichzeitig die Massezuführöffnung öffnet, die über die Pumpe zugeführte Süßwarenmasse und die aus dem Speicherraum zugeführte Süßwarenmasse in den Dosierraum zu saugen. Bei Abgabe von Süßwarenmasse über die Masseabgabeöffnung wird der Dosierkolben ferner dazu genutzt, die zufließende Masse in den Speicherraum zu saugen. Aus dem Speicherraum kann die Masse dann in den Dosierraum geführt werden. Der über die Massezuführöffnung zugeführte Massestrom ist dementsprechend auf die Größe der Kolbenflächen sowie die Geschwindigkeit der Hubbewegung des Dosierkolbens abzustimmen.

In diesem Zusammenhang kann vorgesehen sein, dass die erste Kolbenfläche, die als Dosierkolbenfläche wirkt, etwa doppelt so groß ist wie die zweite Kolbenfläche, die als Speicherkolbenfläche wirkt. Dadurch lässt sich erreichen, dass beim Ansaugen von Masse in den Dosierraum einerseits etwa die Hälfte der angesaugten Masse über die Massezuführöffnung von einem Vorratsbehälter zugeführt wird, wobei etwa die andere Hälfte der in den Dosierraum angesaugten Masse von dem Speicherraum abgegeben wird.

Während des Dosiervorgangs, d.h. dann, wenn der Dosierkolben Masse aus dem Dosierraum über die Masseabgabeöffnung an dem geöffneten Ventil vorbei aus der Vorrichtung auspresst, wird die über die Massezuführöffnung zugeführte Masse unmittelbar in den Speicherraum geleitet.

Erfindungsgemäß kann ferner vorgesehen sein, dass der Dosierkolben und das Ventil dichtungslos mit geringem Spiel in diesen zugeordneten Führungen aufgenommen sind, wobei dieses Spiel im Betrieb mit Süßwarenmasse gefüllt und derart bemessen ist, dass Rekristallisation bewirkende Scherkräfte in der Süßwarenmasse bei einer Bewegung von Kolben oder Ventil weitgehend unterbunden sind. Mit anderen Worten ist das Spiel produktabhängig eingestellt. Eine solche Ausgestaltung der erfindungsgemäßen Vorrichtung ist insbesondere dann vorteilhaft, wenn die Vorrichtung zum Dosieren von zur Rekristallisation neigenden Süßwarenmassen, insbesondere übersättigten Zuckerlösungen zur Hartbonbonherstellung genutzt wird. Derartige Massen neigen nämlich zur Ausbildung von Keimkristallen im Bereich der Kolbenführungsflächen bei allzu großen Scherbelastungen und Reibungseffekten. Dies kann durch die vorstehend geschilderte Ausgestaltung vermieden werden. Darüber hinaus wird eine bessere Reinigungsfähigkeit der erfindungsgemäßen Vorrichtung dadurch erzielt, dass die Kolben und Ventile für die Reinigung aus ihren Zylindern nach oben herausgefahren werden können und allseits von der Reinigungsflüssigkeit umspült werden. Aus dem Stand der Technik bekannte dichtend geführte Dosierkolben führen in zweierlei Hinsicht zur Rekristallisation. Zum einen durch die hohen Scherkräfte in dem engen Spalt zwischen Kolben und Zylinder und zum Anderen durch mangelnden Austausch der Süßwarenmasse durch frische Masse. Bei einer dichtungsfreien Führung mit Spiel befindet sich hingegen rings um den Kolben oder das Ventil herum dieselbe Süßwarenmasse, so dass keine Leckverluste entstehen können.

Das Ventil kann erfindungsgemäß als Hubventil derart ausgebildet sein, dass in einer Zwischenstellung sowohl der Ansaugkanal zum Kolben als auch der Auspresskanal zur Düse abgeschlossen sind. Für Reinigungszwecke kann das Ventil in eine Reinigungsposition gefahren werden, in der es von einer Reinigungsflüssigkeit ausreichend gut umspielt werden kann.

Eine Weiterbildung der Erfindung sieht vor, dass das Ventil ein Dreh-Hubventil ist, das einen Ventilkörper aufweist, der durch eine Drehbewegung zwischen einer Offenstellung und einer Schließstellung verlagerbar ist, und der durch eine Hubbewegung zu Dosierzwecken oder Reinigungszwecken verlagerbar ist. Alternativ hierzu ist auch ein Drehschieberventil möglich.

Erfindungsgemäß kann ferner vorgesehen sein, dass das Ventil dazu ausgebildet ist, am Ende eines Dosiervorgangs einen kurzen Rückhub auszuführen. Dies ist insbesondere für das Dosieren von Hartbonbonmassen erforderlich, wobei einer Fadenbildung entgegengewirkt werden muss. Durch den kurzen Rückhub wird die Hartbonbonmasse in die Düse zurückgesaugt.

Eine Ausführungsvariante der Erfindung sieht eine linear verlagerbare Düsenschiene mit wenigstens einer Masseabgabeöffnung vor. Dabei kann vorgesehen sein, dass die Düsenschiene auswechselbar ist. Durch diese Maßnahme wird die Reinigungsmöglichkeit der erfindungsgemäßen Vorrichtung verbessert. Darüber hinaus lassen sich unterschiedliche Düsenschienen mit unterschiedlicher Anzahl von Düsen für verschiedene Dosieraufgaben verwenden. Ist die Anzahl der Düsen kleiner als die der Kolben und Ventile, so werden die nicht in Betrieb befindlichen Kolben und Ventile deaktiviert.

Alternativ zur Verwendung einer linear verlagerbaren Düsenschiene kann die Vorrichtung auch einen rotatorisch verstellbaren Düsenrotor mit wenigstens einer Masseabgabeöffnung aufweisen. Auch diesbezüglich kann unter Erreichen derselben Vorteile, wie vorstehend geschildert, vorgesehen sein, dass der Düsenrotor auswechselbar ist.

Um große Volumina effizient dosieren zu können, sieht eine Weiterbildung der Erfindung eine Mehrzahl von in Serie geschalteten Dosierkolben und Ventilen vor.

Die Erfindung betrifft ferner ein Verfahren zum Dosieren von Süßwarenmassen mit einer Vorrichtung der vorstehend beschriebenen Art, umfassend die folgenden Schritte: kontinuierliches Zuführen der Süßwarenmasse unter Druck oder drucklos über wenigstens eine Massezuführöffnung, reziprozierendes Bewegen des wenigstens einen Dosierkolbens in dem Dosierraum derart, dass er wechselweise Süßwarenmasse von der Massezuführöffnung und dem Speicherraum gleichermaßen über das in Ansaugstellung stehende Ventil in den Dosierraum saugt oder aus diesem zur Masseabgabeöffnung über das nun in Auspressstellung stehende Ventil volumetrisch dosiert ausstößt, während der Speicherraum auf der Kolbenrückseite erneut mit Masse gefüllt wird.

Ferner betrifft die Vorrichtung ein Verfahren zum Reinigen und/oder Sterilisieren der Vorrichtung der vorstehend beschriebenen Art mit den folgenden Schritten: Bewegen des Dosierkolbens aus dem den Dosierkolben führenden Dosierkolbenzylinder heraus in einen Bereich eines mit der Massezuführöffnung verbundenen Massekanals, Bewegen des Ventilkörpers aus der Ventilführung heraus in einen Bereich des mit der Massezuführöffnung verbundenen Massekanals unter Freigabe der Masseabgabeöffnung, Zuführen eines Reinigungsmediums über die Massezuführöffnung und Spülen der Vorrichtung, Abführen des Reinigungsmediums über die Masseabgabeöffnung.

Durch die Erfindung wird es möglich, eine CIP-fähige (cleaning in process) sowie eine SIP-fähige (sterilization in process) Vorrichtung bereitzustellen. Mit anderen Worten muss die Vorrichtung nicht zum Reinigen bzw. zum Sterilisieren demontiert werden. Es reicht aus, wenn Kolben und Ventil in jeweils zugeordnete Reinigungsstellungen verlagert und anschließend die entsprechenden Reinigungsschritte durchgeführt werden.

Die Erfindung wird im Folgenden beispielhaft anhand der beiliegenden Figuren erläutert. Es stellen dar:
- Fig. 1: eine schematische Ansicht einer erfindungsgemäßen Vorrichtung beim Ansaugen von Masse in den Dosierraum;
- Fig. 2: eine Ansicht gemäß Fig. 1 beim Übergang zu einer Dosierstellung;
- Fig. 3: die Vorrichtung gemäß Fig. 1 und 2 beim Abgeben von Süßwarenmasse über die Masseabgabeöffnung;
- Fig. 4: die Vorrichtung am Ende des Dosiervorgangs;
- Fig. 5: eine beispielhafte Ausgestaltung einer ersten Ausführungsvariante der Erfindung;
- Fig. 6: eine zur Fig. 5 alternative Ausgestaltung der erfindungsgemäßen Vorrichtung mit einem drehbaren Ventil; und
- Fig. 7: eine weitere Erfindungsvariante mit einem horizontal angeordneten Schieber.

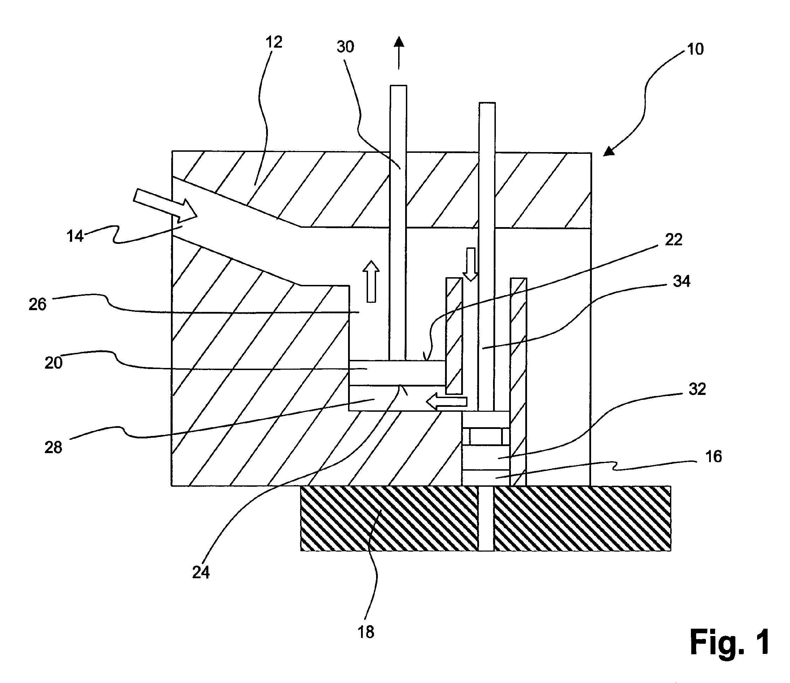

In Fig. 1 ist eine erfindungsgemäße Dosiervorrichtung schematisch dargestellt und allgemein mit 10 bezeichnet. Diese umfasst ein Gehäuse 12, das eine Massezuführöffnung 14 aufweist. Über die Massezuführöffnung 14 wird Süßwarenmasse aus einem Vorratsbehälter zugeführt. Das Gehäuse 12 weist ferner eine Masseabgabeöffnung 16 auf, über die Süßwarenmasse abgeführt werden kann. An dem Gehäuse 12 ist eine linear verlagerbare Düsenschiene 18 angebracht.

In dem Gehäuse 12 ist ein Dosierkolben 20 im Rahmen einer reziprozierenden Hubbewegung nach oben und nach unten verlagerbar. Der Dosierkolben 20 besitzt eine obere Kolbenfläche 22 und eine untere Kolbenfläche 24. Die obere Kolbenfläche 22 ist etwa halb so groß wie die untere Kolbenfläche 24. Die obere Kolbenfläche 22 begrenzt einen Speicherraum 26. Die untere Kolbenfläche 24 begrenzt einen Dosierraum 28. Der Dosierkolben 20 ist über einem Stößel 30 im Gehäuse 12 geführt.

Parallel zu dem Kolben 20 ist ein Ventil mit einem Ventilkörper 32 in der Masseabgabeöffnung 16 geführt. Der Ventilkörper 32 ist über einen Stößel 34 linear nach oben und nach unten verlagerbar sowie antreibbar.

Man erkennt in Fig. 1 die aktuellen Masseströme qualitativ mit fett eingezeichneten Pfeilen. Über die Massezuführöffnung 14 erfolgt ein Massestrom aus dem Vorratsbehälter. Der Dosierkolben 20 wird in dieser Phase gerade entsprechend dem Bewegungspfeil an einem Stößel 30 nach oben verlagert. Demzufolge wird die vorher zugeführte Süßwarenmasse aus dem Speicherraum 26 herausgefördert. Ein sich aus der Summe des über die Massezuführöffnung 14 zugeführten Massestroms und des aus dem Speicherraum 26 herausgedrückten Massestroms ergebender Gesamtmassestrom strömt an dem Stößel 34 vorbei in den Dosierraum 28. Das Ventil 32 verschließt die Masseabgabeöffnung 16.

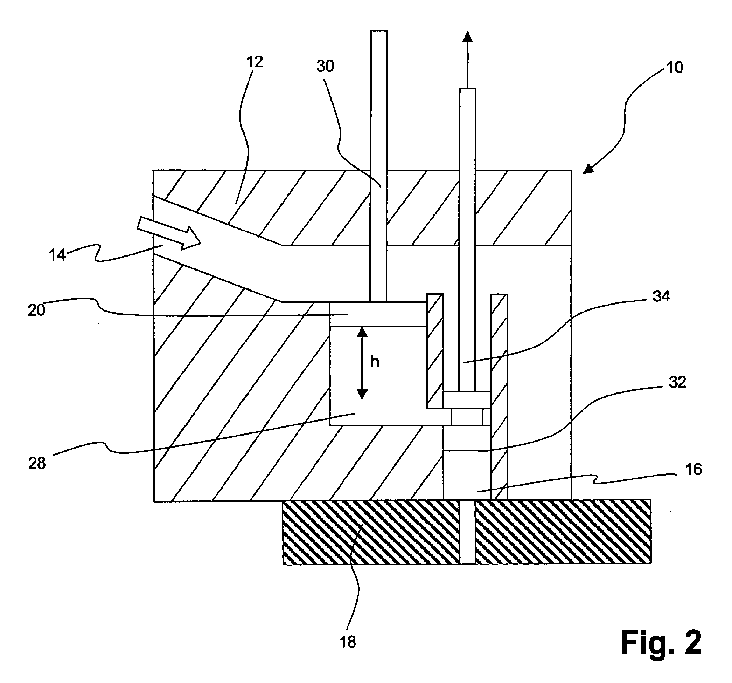

In dem in Fig. 2 gezeigten Zustand bleibt der Massezustrom über die Massezuführöffnung 14 unverändert. Allerdings befindet sich der Dosierkolben 20 in seiner höchsten Stellung. Er hat den Kolbenhub h zurückgelegt. Der Dosierraum 28 ist nun vollständig mit Süßwarenmasse gefüllt. In diesem Zustand wird der Ventilkörper 32 nach oben verlagert. Die in Fig. 2 gezeigte Phase ist nur von kurzer Dauer. Dabei kann noch Masse am Ventilkörper 32 vorbei strömen.

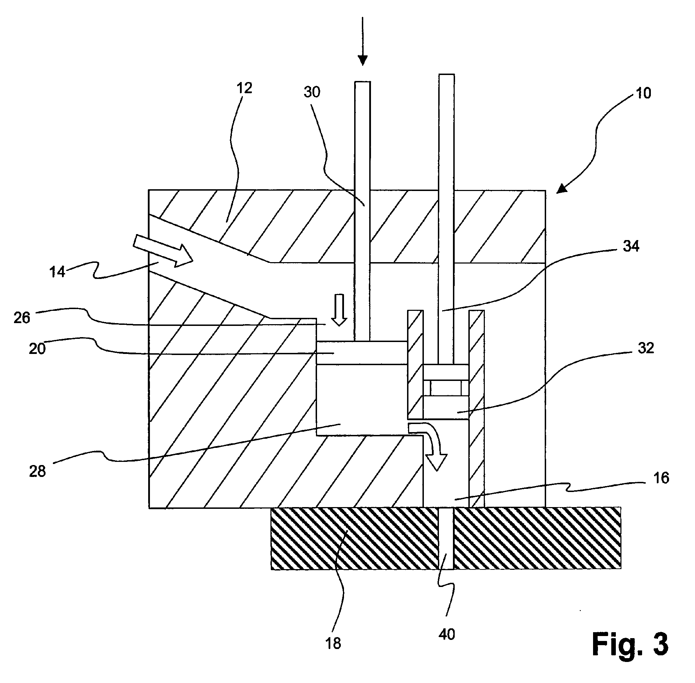

In Fig. 3 beginnt nun die Masseabgabephase. Der Dosierkolben 20 wird gemäß den Bewegungspfeilen nach unten verlagert. Dadurch wird Süßwarenmasse aus dem Dosierraum 28 über die Masseabgabeöffnung 16 ausgepresst, die von dem Ventilkörper 32 freigegeben wird. Diese Süßwarenmasse kann nun über eine Düse 40 in der Düsenschiene 18 abgegeben werden. Mit zunehmender Verlagerung des Dosierkolbens 20 nach unten wird zugeführte Süßwarenmasse in dem Speicherraum 26 aufgenommen. Ein Zwischenspeichern (Puffern) von Süßwarenmasse außerhalb der erfindungsgemäßen Vorrichtung 10 ist daher nicht erforderlich.

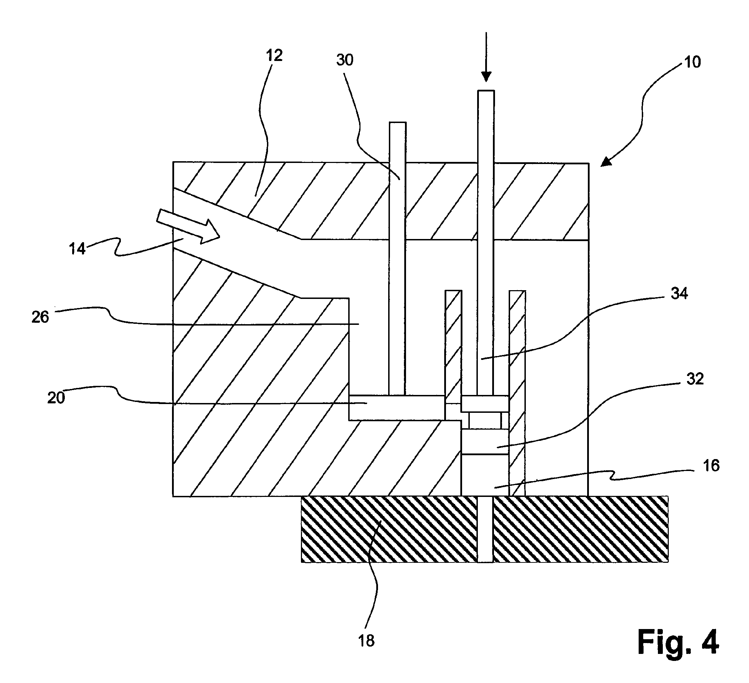

In der Darstellung gemäß Fig. 4 befindet sich der Dosierkolben 20 in seiner tiefsten Stellung. Der Dosierraum ist vollständig entleert, der Speicherraum 26 vollständig gefüllt.

Ist dieser Zustand erreicht, wird der Ventilkörper 32 wieder nach unten in die Masseabgabeöffnung verlagert. In der Folge wird der Dosierkolben 20, wie in Fig. 1 gezeigt, wieder angehoben, so dass der Dosierraum mit der zugeführten Masse gefüllt werden kann. Es beginnt derselbe Zyklus, wie vorstehend beschrieben.

Durch die erfindungsgemäße Ausgestaltung des Dosierkolbens mit seinen beiden Flächen, insbesondere durch das wechselweise Füllen und Entleeren von Dosierraum 28 und Speicherraum 26 ist ein Zwischenspeichern bzw. Puffern von Süßwarenmasse außerhalb der erfindungsgemäßen Vorrichtung nicht erforderlich. Dadurch kann der Aufbau gegenüber den aus dem Stand der Technik bekannten Vorrichtungen erheblich vereinfacht werden.

Man erkennt in den Figuren auch, dass sich die Erfindung verhältnismäßig leicht reinigen und sterilisieren lässt. Durch Hochfahren des Dosierkolbens 20 sowie des Ventilkörpers 32 in eine Stellung, in der beide Elemente frei in dem mit der Zuführöffnung 14 verbundenen Kanal sind, lässt sich die Vorrichtung einfach mit Reinigungsmedium füllen und spülen, wobei alle Komponenten wirksam umspült werden, ohne dass eine Demontage der Vorrichtung erforderlich ist. Auch kann die Düsenschiene 18 entsprechend einfach gereinigt oder durch eine andersartige Düsenschiene ausgetauscht werden, etwa mit andersartiger Düseneinteilung oder Düsenanzahl.

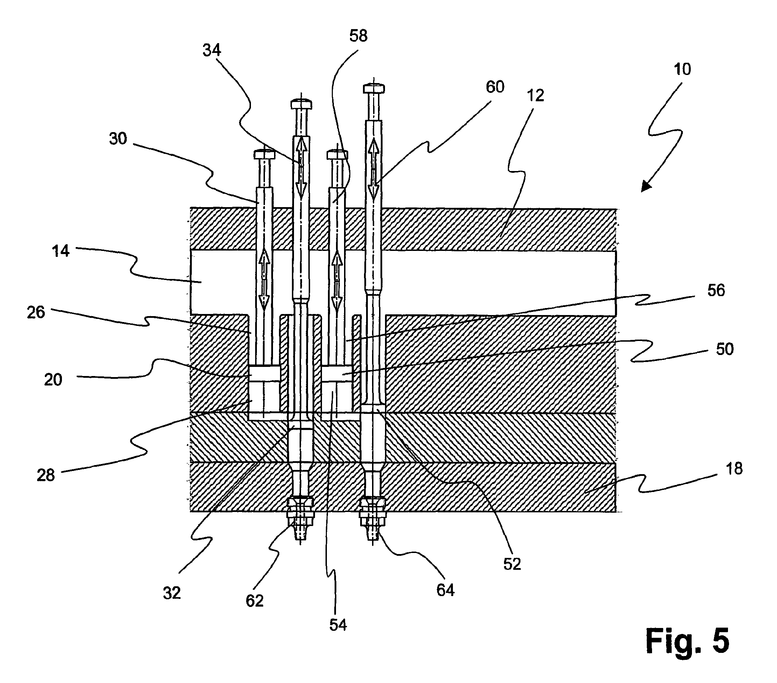

Fig. 5 zeigt nun eine konkrete Ausgestaltung der Erfindung, mit zwei Dosierkolben 20₁ und 20₂, zwei Ventilkörpern 32, 52, entsprechenden Dosierkammern 28, 54, zwei Speicherräumen 26, 56. Der zweite Dosierkolben 50 ist über einen Stößel 58 steuerbar. Der zweite Ventilkörper 52 ist über einen Stößel 60 steuerbar. Man erkennt, dass in der Düsenschiene 18 zwei Düsen 62 und 64 angeordnet sind.

Die Besonderheit dieser Ausführungsform liegt darin, dass die beiden Ventilkörper 32 und 52 allein durch Hubverlagerung zwischen einer Offenstellung und einer Schließstellung verlagerbar sind. Es handelt sich dabei um reine Hubventile.

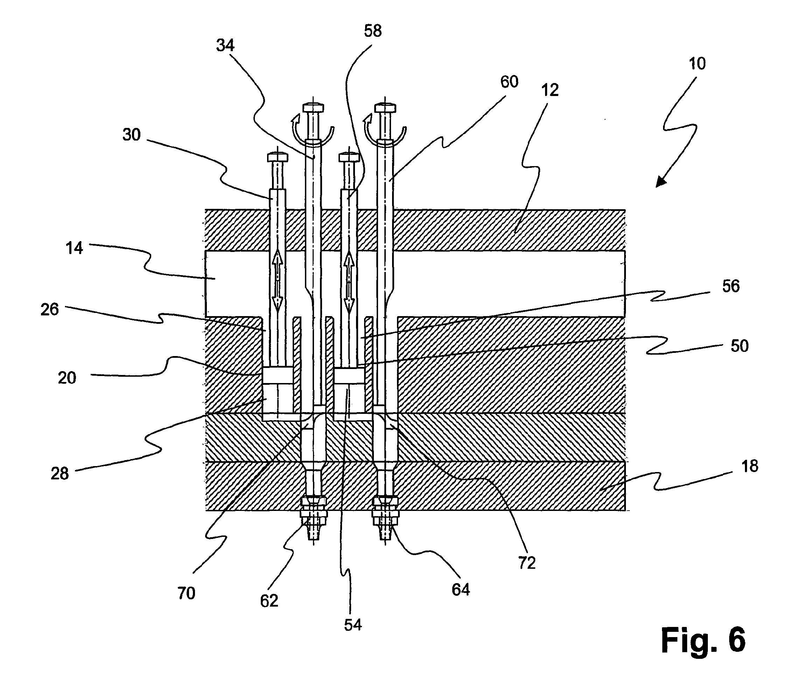

Eine ähnliche Ausgestaltung findet sich in Fig. 6 wieder. Dort sind die beiden Ventilkörper 70 und 72 aber nicht als Hubventile ausgebildet, sondern als Drehventile, die je nach Stellung eine Verbindung zwischen den Dosierräumen 28, 54 und den Düsen 62, 64 zulassen oder nicht. Allerdings können die beiden Ventilkörper 70, 72 zu Reinigungszwecken vertikal verlagert werden, um so vollständig von Reinigungsfluid umspült zu werden.

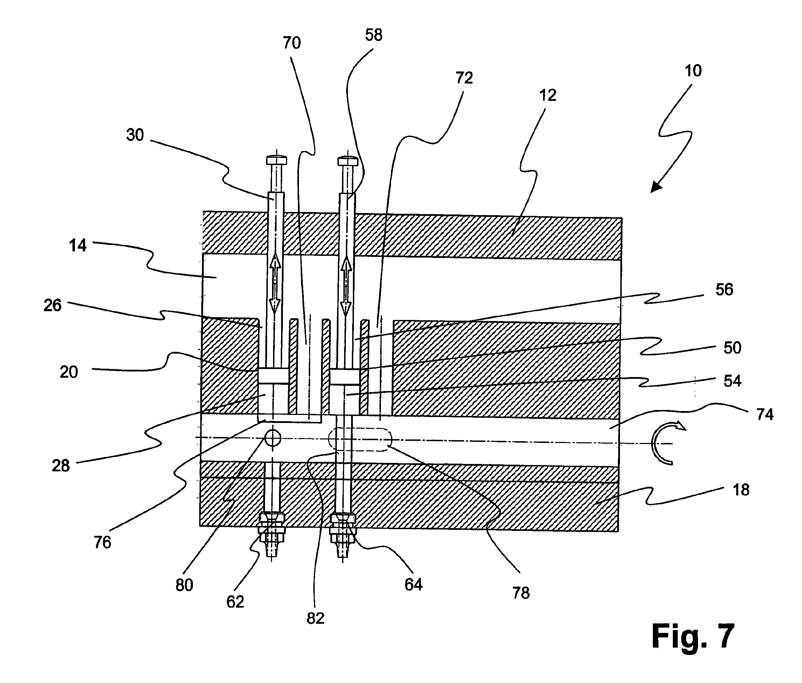

Fig. 7 zeigt eine weitere Ausführungsvariante der Erfindung. Dabei sind keine Ventilkörper vorgesehen. Vielmehr sind Kanäle 70, 72 vorgesehen, die zu einem Drehschieber 74 hin führen. Dieser Drehschieber 74 weist einerseits Kanalabschnitte 76, 78 auf, die für eine Verbindung zu den Dosierräumen 28, 54 sorgen. Ferner sind in dem Drehschieber 74 achsorthogonale Bohrungen 80, 82 vorgesehen, die für eine Verbindung zwischen den Dosierräumen 28, 54 und den Düsen 62, 64 führen. Je nach Drehstellung des Drehschiebers 74 sind die Dosierräume 28 bzw. 54 zur Zuführung von Masse mit den Kanälen 70 bzw. 72 verbunden oder von diesen getrennt, so dass aus den Dosierräumen 28, 54 Süßwarenmasse über die Düsen 62, 64 abgegeben werden kann.

Die im Detail gezeigten Vorrichtungen 5, 6 und 7 funktionieren alle entsprechend dem vorstehend mit Bezug auf Fig. 1 bis 4 geschilderten Prinzip. Erfindungsgemäß ist es nicht erforderlich, zugeführte Süßwarenmasse zwischenzuspeichern oder in großen Mengen zu dem Vorratsbehälter zurückzuführen.

## Patentansprüche

1. Vorrichtung (10) zum Dosieren von Süßwarenmassen mit
- wenigstens einer Massezuführöffnung (14) zum kontinuierlichen Zuführen der Süßwarenmasse unter Druck oder drucklos,
- wenigstens einer Masseabgabeöffnung (16) zum dosierten Abgeben der Süßwarenmasse,
- wenigstens einem Dosierkolben (20), der mit seiner ersten Kolbenfläche (24) einen Dosierraum (28) begrenzt und in diesem reziprozierend derart bewegbar ist, dass er wechselweise Süßwarenmasse von der Massezuführöffnung (14) in den Dosierraum (28) saugt oder aus diesem zur Masseabgabeöffnung (16) ausstößt,
- wenigstens einem Ventil, das zum dosierten Abgeben der Süßwarenmasse aus dem Dosierraum über die Masseabgabeöffnung (16) in eine Offenstellung und eine Schließstellung schaltbar ist,
wobei der Dosierkolben (20) eine von der ersten Kolbenfläche (24) abgewandte zweite Kolbenfläche (22) aufweist, die einen Speicherraum (26) begrenzt, wobei der Speicherraum (26) bei der reziprozierenden Bewegung des Dosierkolbens (20) wechselweise mit von der Massezuführöffnung (14) zugeführter Süßwarenmasse füllbar oder in den Dosierraum (28) entleerbar ist, wobei die erste Kolbenfläche (24) größer ausgebildet ist als die zweite Kolbenfläche (22) derart, dass bei konstanter Zufuhr der Süßwarenmasse der aktuelle Bedarf an Süßwarenmasse zum Füllen des Dosierraums (28) oder des Speicherraums (26) ohne das Erfordernis einer Süßwarenmasserückfuhr gedeckt ist.

2. Vorrichtung (10) nach Anspruch 1,
**dadurch gekennzeichnet, dass** die erste Kolbenfläche (24) etwa doppelt so groß ist wie die zweite Kolbenfläche (22).

3. Vorrichtung (10) nach Anspruch 1 oder 2,
**dadurch gekennzeichnet, dass** der Dosierkolben (20) und das Ventil (32) dichtungslos mit geringem Spiel in diesen zugeordneten Führungen aufgenommen sind, wobei dieses Spiel im Betrieb mit Süßwarenmasse gefüllt und derart bemessen ist, dass Rekristallisation bewirkende Scherkräfte in der Süßwarenmasse bei einer Bewegung von Dosierkolben (20) oder Ventil (32) unterbunden sind.

4. Vorrichtung (10) nach einem der vorangehenden Ansprüche,
**dadurch gekennzeichnet, dass** das Ventil ein Dreh-Hubventil ist, das einen Ventilkörper (32) aufweist, der durch eine Drehbewegung zwischen einer Offenstellung und einer Schließstellung verlagerbar ist, und der durch eine Hubbewegung zu Dosierzwecken oder Reinigungszwecken verlagerbar ist.

5. Vorrichtung (10) nach einem der vorangehenden Ansprüche,
**dadurch gekennzeichnet, dass** das Ventil mit seinem Ventilkörper (32) dazu ausgebildet ist, am Ende eines Dosiervorgangs einen kurzen Rückhub auszuführen.

6. Vorrichtung (10) nach einem der vorangehenden Ansprüche,
**dadurch gekennzeichnet, dass** Dosierkolben und Ventile einzeln deaktivierbar sind.

7. Vorrichtung (10) nach einem der vorangehenden Ansprüche,
**gekennzeichnet durch** eine linear verlagerbare Düsenschiene (18) mit wenigstens einer Düse (40).

8. Vorrichtung (10) nach Anspruch 7,
**dadurch gekennzeichnet, dass** die Düsenschiene (18) auswechselbar ist.

9. Vorrichtung (10) nach einem der Ansprüche 1 bis 6,
**gekennzeichnet durch** einen rotatorisch verstellbaren Drehschieber (74) mit wenigstens einer Masseabgabeöffnung.

10. Vorrichtung (10) nach Anspruch 9,
**dadurch gekennzeichnet, dass** der Drehschieber (74) auswechselbar ist.

11. Vorrichtung (10) nach einem der vorangehenden Ansprüchen,
**gekennzeichnet durch** eine Mehrzahl von in Serie geschalteten Dosierkolben und Ventilen.

12. Verfahren zum Dosieren von Süßwarenmassen mit einer Vorrichtung nach einem der vorangehenden Ansprüche, umfassend die folgenden Schritte:
- kontinuierliches Zuführen der Süßwarenmasse über die wenigstens eine Massezuführöffnung unter Druck,
- reziprozierendes Bewegen des wenigstens einen Dosierkolbens in dem Dosierraum derart, dass er wechselweise Süßwarenmasse von der Massezuführöffnung und dem Speicherraum in den Dosierraum saugt oder aus diesem zur Masseabgabeöffnung ausstößt, und
- dosiertes Abgeben der Süßwarenmasse aus dem Dosierraum über die Masseabgabeöffnung über das wenigstens eine Ventil, das bei einer Ausstoßbewegung des Dosierkolbens in seine Offenstellung geschaltet ist und gleichzeitig das Ansaugen der Süßwarenmasse in den Speicherraum erlaubt und beim Ansaugen von Süßwarenmasse in seine Schließstellung geschaltet wird.

13. Verfahren zum Reinigen und/oder Sterilisieren der Vorrichtung nach einem der Ansprüche 1 bis 11, **gekennzeichnet durch** die folgenden Schritte:
- Bewegen des Dosierkolbens in einen Bereich eines mit der Massezuführöffnung verbundenen Massekanals,
- Bewegen des Ventilkörpers in einen Bereich des mit der Massezuführöffnung verbundenen Massekanals unter Freigabe der Masseabgabeöffnung,
- Zuführen eines Reinigungsmediums über die Massezuführöffnung und Spülen der Vorrichtung,
- Abführen des Reinigungsmediums über die Masseabgabeöffnung.
